# EUROPEAN PATENT APPLICATION

(11) **EP 4 753 342 A1**
(43) Date of publication of application: **03.06.2026**
(21) Application number: 23946266.6
(22) Date of filing: 27.07.2023
(51) Int. Cl.: H04W 56/00

(54) **CLOCK DETERMINATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN); CUI, Shengjiang, Dongguan, Guangdong 523860 (CN); XU, Weijie, Dongguan, Guangdong 523860 (CN); ZHANG, Zhi, Dongguan, Guangdong 523860 (CN)
(74) Representative: Grassi, Stefano
(86) International application number: PCT/CN2023/109639
(87) International publication number: WO 2025/020184

(57) **Abstract**

Embodiments of the present disclosure provide a clock determination method and apparatus, a terminal device, and a network device. The method comprises: a terminal device receives a first signal and a second signal, wherein the first signal is different from the second signal, and a clock of a signal to be transmitted of the terminal device is determined on the basis of difference information between the first signal and the second signal.

## Description

### TECHNICAL FIELD

Embodiments of the present disclosure relate to the technical field of mobile communications, and in particular to a method and an apparatus for clock determination, a terminal device, and a network device.

### BACKGROUND

For terminal devices with low complexity, low cost and low power, it is usually impossible to maintain a precise timing and small frequency drift and/or time drift like traditional terminal devices. That is, such terminal devices cannot maintain an accurate local oscillation signal at a desired frequency for a long time.

Therefore, for the terminal devices with low complexity, low cost and low power, an urgent problem to be solved is how to obtain the clock of the to-be-transmitted local signals in a low power and low cost way.

### SUMMARY

The embodiments of the present disclosure provide a method and an apparatus for clock determination, a terminal device, and a network device.

According to a first aspect, a method for clock determination according to an embodiment of the present disclosure includes the following operations.

A terminal device receives a first signal and a second signal. The first signal is different from the second signal, and a clock of a to-be-transmitted signal of the terminal device is determined based on difference information between the first signal and the second signal.

In a second aspect, a method for clock determination according to an embodiment of the present disclosure includes the following operation.

A first network device sends a first signal to a terminal device. The first signal is different from a second signal sent by a second network device to the terminal device, and the first signal and the second signal are used to determine a clock of a to-be-transmitted signal of the terminal device.

According to a third aspect, an apparatus for clock determination according to an embodiment of the present disclosure is applied to a terminal device, and the apparatus for clock determination includes a receiving unit.

The receiving unit is configured to receive a first signal and a second signal. The first signal is different from the second signal, a clock of a to-be-transmitted signal of the terminal device is determined based on difference information between the first signal and the second signal.

According to a fourth aspect, an apparatus for clock determination according to an embodiment of the present disclosure is applied to a first network device, and the apparatus for clock determination includes a sending unit.

The sending unit is configured to send a first signal to the terminal device. The first signal is different from a second signal sent by a second network device to the terminal device, and the first signal and the second signal determine a clock of a to-be-transmitted signal of the terminal device.

According to a fifth aspect, a terminal device according to an embodiment of the present disclosure includes a processor and a memory. The memory is configured to store a computer program, and the processor is configured to invoke and execute the computer program stored in the memory to perform the method for clock determination as described above.

According to a sixth aspect, a network device according to an embodiment of the present disclosure includes a processor and a memory. The memory is configured to store a computer program, and the processor is configured to invoke and execute the computer program stored in the memory to perform the method for clock determination as described above.

A chip is provided according to an embodiment of the present disclosure, which is used for implementing the method for clock determination described above.

Specifically, the chip includes a processor configured for invoking and executing a computer program from a memory to enable a device on which the chip is mounted to perform the method for clock determination as described above.

A computer-readable storage medium is provided according to an embodiment of the present disclosure, which is configured to store a computer program that causes a computer to execute the method for clock determination as described above.

A computer program product is provided according to an embodiment of the present disclosure, which includes computer program instructions that cause a computer to execute the method for clock determination described above.

A computer program is provided according to an embodiment of the present disclosure, which, when running on the computer, causes the computer to execute the method for clock determination as described above.

According to the method for clock determination provided by the embodiments of the present disclosure, a network device can send different signals to a terminal device, so that the terminal device may determine the clock of a to-be-transmitted signal of the terminal device based on the difference information between the received different signals. In this way, the terminal device can generate a precise local clock without using a high-precision crystal oscillator, and thus the power consumption and the cost of the terminal device can be reduced.

### BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation to the present disclosure. In the accompanying drawings:
FIG. 1 is a schematic diagram of an application scenario according to an embodiment of the present disclosure;
FIG. 2 is a schematic diagram of an architecture of a zero-power communication system according to an embodiment of the present disclosure;
FIG. 3 is a schematic structural diagram of a radio frequency power harvesting module according to an embodiment of the present disclosure;
FIG. 4 is a schematic diagram of a backscatter communication principle according to an embodiment of the present disclosure;
FIG. 5 is a schematic diagram of a resistance-based load modulation principle according to an embodiment of the present disclosure;
FIG. 6 is a first schematic flowchart of a method for clock determination according to an embodiment of the present disclosure;
FIG. 7 is a second schematic flowchart of a method for clock determination according to an embodiment of the present disclosure;
FIG. 8 is a schematic diagram of a second-order cross modulation result according to an embodiment of the present disclosure;
FIG. 9 is a schematic diagram of a third-order cross modulation result according to an embodiment of the present disclosure;
FIG. 10 is a third schematic flowchart of a method for clock determination according to an embodiment of the present disclosure;
FIG. 11 is a first schematic diagram of a scenario for clock determination according to an embodiment of the present disclosure;
FIG. 12 is a second schematic diagram of a scenario for clock determination according to an embodiment of the present disclosure;
FIG. 13 is a third schematic diagram of a scenario for clock determination according to an embodiment of the present disclosure;
FIG. 14 is a schematic structural diagram of an apparatus for clock determination 1400 according to an embodiment of the present disclosure;
FIG. 15 is a schematic structural diagram of an apparatus for clock determination 1500 according to an embodiment of the present disclosure;
FIG. 16 is a schematic structural diagram of a communication device according to an embodiment of the present disclosure;
FIG. 17 is a schematic structural diagram of a chip according to an embodiment of the present disclosure; and
FIG. 18 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure, and it is apparent that the described embodiments are a part of the embodiments of the present disclosure, rather than all of the embodiments. Based on the embodiments in the present disclosure, all other embodiments obtained by those skilled in the art without creative work shall fall within the scope of protection of the present disclosure.

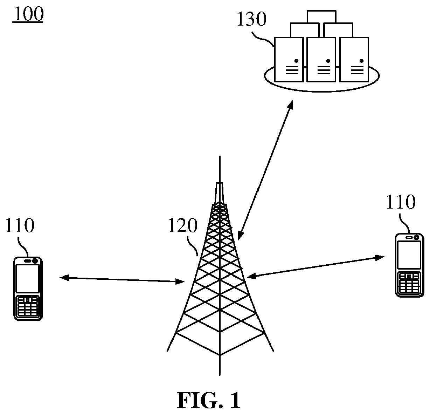

FIG. 1 is a schematic diagram of an application scenario according to an embodiment of the present disclosure.

As shown in FIG. 1, the communication system 100 may include terminal devices 110 and a network device 120. The network device 120 may communicate with the terminal devices 110 through an air interface. Multi-service transmission is supported between the terminal devices 110 and the network device 120.

It should be understood that the communication device 100 is illustrated as an example in the embodiments of the present disclosure, but the embodiments of the present disclosure are not limited thereto. That is, the technical solution of the embodiments of the present disclosure can be applied to various communication systems, such as a long term evolution (LTE) system, an LTE time division duplex (TDD), a universal mobile telecommunication system (UMTS), an internet of things (IoT) system, a narrow band internet of things (NB-IoT) system, an enhanced machine-type communications (eMTC) system, a 5th generation mobile communication technology (5G) communication system (also referred to as new radio (NR) communication system), or a future communication system, etc.

In the communication system 100 illustrated in FIG. 1, the network device 120 may be an access network device that communicates with the terminal devices 110. The access network device may provide communication coverage for a particular geographic area and may communicate with the terminal devices 110 (e.g., UE) within the coverage area.

The network device 120 may be an evolutionary Node B (eNB or eNodeB) in the LTE system or a next generation radio access network (NG RAN) device, or a base station (the next generation Node B, gNB) in the NR system, or a wireless controller in a cloud radio access network (CRAN). Optionally, the network device 120 may be a relay station, an access point, an in-vehicle device, a wearable device, a hub, a switch, a bridge, a router, or a network device in a future evolution public land mobile network (PLMN), etc.

The terminal device 110 may be any terminal device including, but not limited to, terminal devices connected to the network device 120 or other terminal devices in a wired or wireless manner.

For example, the terminal device 110 may be an access terminal, a user equipment (UE), a user unit, a user station, a mobile station, a mobile unit, a remote station, a remote terminal, a mobile device, a user terminal, a terminal, a wireless communication device, a user agent or a user device. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device having wireless communication functionality, a computing device or other processing device connected to a wireless modem, an in-vehicle device, a wearable device, a terminal device in a 5G network or a terminal device in a future evolution network, or the like.

The terminal device 110 may be used for device-to-device (D2D) communication.

The wireless communication system 100 may further include a core network device 130 that communicates with the network device 120, and the core network device 130 may be a 5G core (5GC) device, for example, an access and mobility management function (AMF), or an authentication server function (AUSF), or a user plane function (UPF), or a session management function (SMF). Optionally, the core network device 130 may also be an evolved packet core (EPC) device in the LTE network, for example, a session management function + core packet gateway (SMF+PGW-C) device. It should be understood that the SMF+PGW-C can simultaneously implement functions that the SMF and PGW-C can implement. In the process of network evolution, the core network devices may be called as other names, or may be formed as a new network entity by dividing the functions of the core network, which is not limited by the embodiments of the present disclosure.

The respective functional units in the communication system 100 may also establish connections between each other through a next generation (NG) network interface to achieve communication.

For example, the terminal device establishes an air interface connection with the access network device through the NR interface, for transmitting user plane data and control plane signaling. The terminal device can establish a control plane signaling connection with AMF through the NG interface 1 (referred to as N1 for short). An access network device, such as a next generation radio access base station (gNB), can establish a user plane data connection with UPF through an NG interface 3 (referred to as N3 for short). The access network device can establish a control plane signaling connection with AMF through the NG interface 2 (referred to as N2 for short). The UPF can establish a control plane signaling connection with SMF through the NG interface 4 (referred to as N4 for short). The UPF can interact user plane data with the data network through the NG interface 6 (referred to as N6 for short). The AMF may establish a control plane signaling connection with the SMF through the NG interface 11 (referred to as N11 for short). The SMF may establish a control plane signaling connection with the PCF through the NG interface 7 (referred to as N7 for short).

FIG. 1 exemplarily illustrates one network device, one core network device, and two terminal devices. Optionally, the wireless communication system 100 may include a plurality of network devices and another number of terminal devices may be included within the coverage range of each network device, which is not limited by the embodiment of the present disclosure.

It should be noted that FIG. 1 only illustrates a system to which the present disclosure is applied as an example, and of course, the method shown in the embodiment of the present disclosure may also be applied to other systems. Further, the terms "system" and "network" are often used interchangeably herein. Herein, the term "and/or" is only an association relationship describing associated objects, and means that there may be three relationships. For example, A and/or B may mean three cases: i.e., independent existence of A, existence of both A and B, and independent existence of B. In addition, the character "/" herein generally indicates that the associated objects before and after are in an "or" relationship. It should also be understood that the "indication" mentioned in the embodiments of the present disclosure may be a direct indication, an indirect indication, or an associated relationship. For example, A indicates B, which may mean that A directly indicates B, for example, B can be acquired through A; which may also mean that A indicates B indirectly, for example A indicates C, and B can be acquired through C; which can also be indicated that there is an association relationship between A and B. It should also be understood that the "correspond" mentioned in the embodiments of the present disclosure may indicate that there is a direct correspondence or indirect correspondence between the two objects, there is an association relationship between the two objects, or the two objections have a relationship between indicating and being indicated, configuring and being configured, or the like. It should also be understood that the "predefined" or "predefined rules" mentioned in the embodiments of the present disclosure may be implemented by storing corresponding codes, tables, or other methods for indicating relevant information in advance in devices (e.g., including terminal devices and network devices), and specific implementations thereof is not limited in the present disclosure. For example, predefinition may refer to definition in the protocol. It should also be understood that in the embodiment of the present disclosure, the "protocol" may refer to a standard protocol in the communication field, and may include, for example, an LTE protocol, an NR protocol, and related protocols applied in future communication systems, which is not limited in the present disclosure.

In order to facilitate understanding of the technical solutions of the embodiments of the present disclosure, the related technologies of the embodiments of the present disclosure are described below, and the related technologies below can be, as optional solutions, arbitrarily combined with the technical solutions of the embodiments of the present disclosure, and all of them belong to the scope of protection of the embodiments of the present disclosure.

The development of communication technology will have higher requirements on the price and power consumption of terminal device, and especially the zero-power communication technology with low complexity, low cost and low power will become the key technology of future communication network.

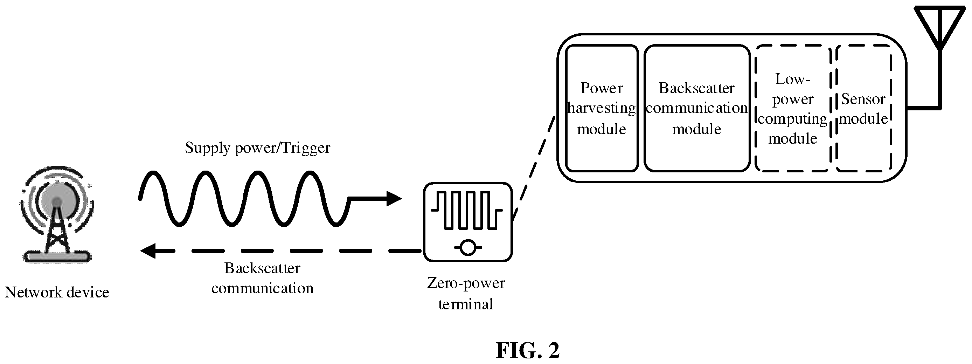

FIG. 2 is schematic diagram of an architecture of a zero-power communication system. As shown in FIG. 2, the zero-power communication system may be composed of a network device and a zero-power terminal. The network device is used to send a power supply signal and/or a downlink communication signal to the zero-power terminal, and is further used to receive a backscatter signal from the zero-power terminal. A basic zero-power terminal may include a power harvesting module, a backscatter communication module, a low-power computing module, and a sensor module. In addition, the zero-power terminal may also have a memory for storing some basic information (such as item identification, etc.), as well as sensing data such as ambient temperature and ambient humidity.

The zero-power communication utilizes key techniques mainly including radio frequency (RF) power harvesting and backscattering communication.

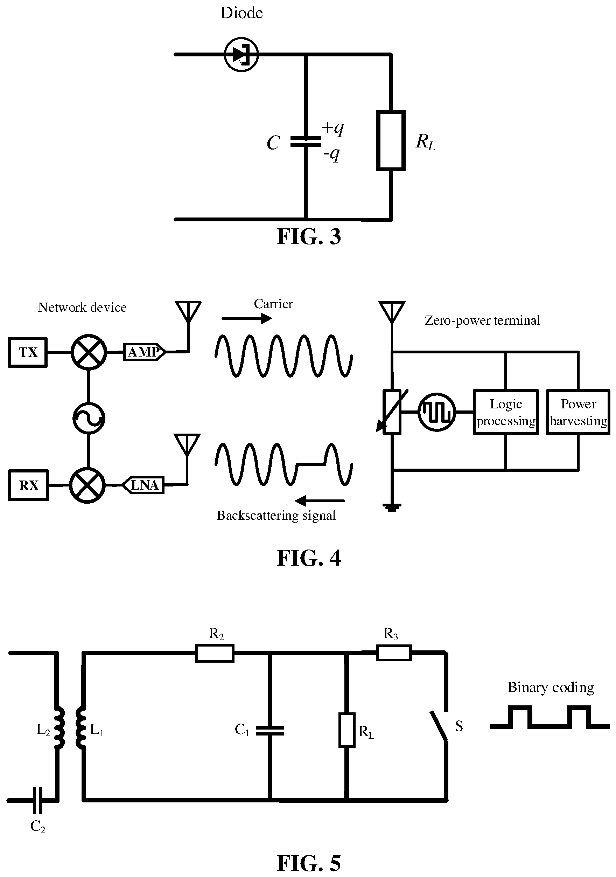

FIG. 3 is a schematic structural diagram of a radio frequency power harvesting module. As shown in FIG. 3, the radio frequency power harvesting module may include a diode, a capacitor C and a resistance RL. In practical applications, the radio frequency power harvesting module obtains energy by harvesting radio waves in the space based on the electromagnetic induction principle to drive the zero-power terminal, such as to drive the low-power demodulation and modulation modules, the sensors and the memory reading. In other words, the zero-power terminal can be battery-less without using conventional batteries.

FIG. 4 is a schematic diagram of a backscatter communication principle. As shown in FIG. 4, the zero-power terminal receives wireless signals sent by the network device, modulates the wireless signal, loads the information to be sent, and radiates the modulated signal from the antennas. This information transmission process is called backscattering communication.

It should be noted that backscattering and load modulation functions are inseparable. The load modulation is implemented by adjusting and controlling the circuit parameters of the oscillation circuit of the zero-power terminal based on the beat of the data stream, to change the parameters such as the impedance of the electronic tag accordingly.

The load modulation technology may include resistance-based load modulation and capacitor-based load modulation. FIG. 5 is a schematic diagram of resistance-based load modulation principle. As shown in FIG. 5, in resistance-based load modulation, the load RL may be connected in parallel with a resistor R3, the resistor R3 may be turned on or off based on the control of the binary data stream, the on-off of the resistor R3 will cause changes in the circuit voltage, thus the amplitude shift keying (ASK) is realized, that is, the modulation and transmission of signals are realized by adjusting the amplitude of the backscatter signal of the zero-power terminal. Similarly, in capacitor-based load modulation, capacitor is turned on or turned off to change the resonant frequency of the circuit, and the frequency shift keying (FSK) modulation may be realized, that is, the modulation and transmission of the signal are realized by adjusting the working frequency of the backscatter signal of the zero-power terminal.

It can be seen that the zero-power terminal modulates the information of the incoming signal by means of load modulation to realize backscatter communication. Therefore, the zero-power terminal has the following significant advantages:
(1) The zero-power terminal does not actively transmit signals, thus it does not require a complex radio frequency link, such as a power amplifier (PA), a radio frequency filter, etc.;
(2) The zero-power terminal does not need to actively generate the high-frequency signals, thus it does not need a high-frequency crystal oscillator;
(3) With the help of the backscatter communication, the signal transmission of the zero-power terminal does not need to consume the terminal's own power.

The following introduces the application scenarios of zero-power communication.

Due to its significant advantages such as extremely low cost, zero-power, and small size, zero-power communication may have wide range of applications, such as logistic for vertical industries, smart warehousing, smart agriculture, energy and power, industrial Internet, etc., as well as applications for individual customers, such as smart wearable and smart home, etc.

Based on the energy source and usage mode of the zero-power terminal, the zero-power terminal may be divided into the following types:

### 1) Passive zero-power terminal

The zero-power terminal does not need a built-in battery. When the zero-power terminal approaches a network node (such as a reader/writer of a radio frequency identification (RFID) system), the zero-power terminal is in the near-field range formed by the antenna radiation of the network node. Therefore, the zero-power terminal antenna generates an induced current through electromagnetic induction, and the induced current drives the low-power chip circuit of the zero-power terminal, to realize the demodulation of signals in the forward link and the backward link. For the backscatter link, the zero-power terminal uses the backscatter technology for signal transmission.

It can be seen that the passive zero-power terminal does not require a built-in battery to drive either the forward or backward links, making it a true zero-power terminal.

The passive zero-power terminal does not require batteries, and the radio frequency circuit and the baseband circuit are very simple, for example, they do not require devices such as a low noise amplifier (LNA), a power amplifier (PA), a crystal oscillator, and an analog to digital converter (ADC). Therefore, the passive zero-power terminal has many advantages, such as small size, light weight, low price and long service life.

### 2) Semi-passive zero-power terminal

The semi-passive zero-power terminal itself does not contain a conventional battery, but it can use a power harvesting module to harvest ambient energy, such as a wireless radio frequency signal energy, a solar energy, a thermal energy, a mechanical vibration energy, etc., and store the harvested energy in an energy storage unit (such as a capacitor). After the energy storage unit obtains energy, it can drive the low-power chip circuit of the zero-power terminal, to realize the demodulation of signals in the forward link signal and the backward link. For the backscatter link, the zero-power terminal can use the backscatter mode or the active transmission mode to realize signal transmission.

It can be seen that the semi-passive zero-power terminal drives the forward link or the reverse link without using a built-in battery. Although the energy stored by the capacitor is used in operation, the energy comes from the ambient energy harvested by the energy harvesting module, so it is also a true zero-power terminal.

The semi-passive zero-power terminal inherits many advantages of the passive zero-power terminal, so it has many advantages such as small size, light weight, low cost and long service life.

### 3) Active zero-power terminal

The zero-power terminal used in some scenarios may also be an active zero-power terminal, and such terminal may have a built-in battery. The battery is used to drive the low-power chip circuit of the zero-power terminal to realize the demodulation of the forward link signal and the modulation of the backward link signal. However, for the backscatter link, the zero-power terminal uses the backscatter technology or the active transmission technology to realize signal transmission. Despite having built-in battery, such active zero-power terminals have extremely low power and complexity, so they can have a smaller capacity battery, thus achieving smaller cost and size. The built-in battery may also be used as an energy storage unit, which is used for the power harvesting module to store the harvested ambient power, thereby achieving a longer maintenance cycle or even maintenance-free.

The active zero-power terminal has a built-in battery for power supply, which increases the communication distance of the zero-power terminal and improves the reliability of communication. Therefore, it may be applied in some scenarios that require relatively high communication distance, read delay, etc.

It should be noted that some zero-power terminals, such as the semi-passive zero-power terminal or the active zero-power terminal, may have the capability of active transmission, that is, the backward link may communicate by active transmission in addition to communicating by backscattering.

Based on the transmitter type of the zero-power terminal, the zero-power terminal may be divided into the following types:

### 1) Zero-power terminal based on backscattering

Such zero-power terminal uses backscattering as described above to send uplink data. Such terminal does not have an active transmitter for active transmission, but only has a backscattering transmitter. Therefore, when the terminal sends data, a carrier needs to be provided by a network device, and the terminal device performs backscattering based on the carrier to realize data transmission.

### 2) Zero-power terminal based on active transmitter

Such zero-power terminal uses an active transmitter with active transmission capability for uplink data transmission. Therefore, when such zero-power terminal sends data, it may send data by using its own active transmitter without requiring network device to provide the carrier. The active transmitter suitable for the zero-power terminal may be an ultra-low power ASK transmitter, an ultra-low power FSK transmitter, etc. Based on current implementations, when such transmitter transmits a 100uw signal, its overall power consumption may be reduced to 400uw to 600uw.

### 3) Zero-power terminal with both backscatter and active transmitter

Such terminal may support both the backscatter and the active transmitter. The terminal may determine which transmission mode for uplink signal to use based on different situations (such as the power level, the available environmental energy), or based on the scheduling of network device: whether to use the backscatter mode or use the active transmitter for active transmission.

With the vigorous development of the cellular IoT, the 3rd generation partnership project (3GPP) has standardized IoT technologies such as NB-IoT, MTC, and RedCap, but there are still many scenarios where IoT communication requirements cannot be satisfied by using related technologies. For example, in a harsh communication environment, the IoT communication requirements in scenarios of the extremely small-sized terminal requirement and the extremely low-cost IoT communication requirement cannot be satisfied by using related technologies.

For the harsh communication environment scenario, some IoT scenarios, such as the ultra-high voltage substation, the high-speed train track monitoring, the environmental monitoring in alpine zone, the industrial production line, etc., may face extreme environments such as high temperature, extremely low temperature, high humidity, high pressure, high radiation or high speed motion. In these scenarios, existing IoT terminals will not work due to the limitations of the working environment of conventional power supplies. In addition, extreme working environments are not conducive to the maintenance of IoT, such as battery replacement.

The scenarios of the extremely small-sized terminal form requirement may include the food traceability, commodity circulation, and smart wearable scenarios, which require terminals to have extremely small sizes to facilitate use in these scenarios. For example, the IoT terminal used for commodity management in the circulation process usually uses the form of electronic tag and is embedded into commodity packaging in a very compact form. For another example, lightweight wearable devices may improve user experience while meeting user needs.

In addition, many IoT communication scenarios require the cost of IoT terminals to be low enough to improve competitiveness relative to other alternative technologies. For example, in logistics or warehousing scenarios, in order to facilitate the management of a large number of circulating items, the IoT terminal may be attached to each item, so as to complete the accurate management of the entire logistics process and the entire cycle through the communication between the terminal and the logistics network. These scenarios require the price of IoT terminals to have sufficient competiveness.

Therefore, in order to cover these unmet IoT communication requirements, the cellular network also need to develop ultra-low-cost, extremely small-size, battery-free, and maintenance-free IoT, and the zero-power IoT may just meet this demand.

It should be additionally pointed out that during the standardization discussion, the zero-power IoT can also be referred to as ambient power enabled IoT (Ambient IoT). The Ambient IoT refers to IoT devices that use various ambient power, such as the wireless radio frequency power, light power, solar power, the thermal power, the mechanical power and other ambient power. Such devices may have no power storage capacity or have very limited power storage capacity (such as using capacitors with a capacity of tens of uF).

The zero-power terminal has the characteristics of low complexity, low cost, and low power, and may achieve maintenance-free and battery-free effects. For the terminal devices with low complexity, low cost and low power, such as the zero-power terminal, it is impossible to maintain relatively precise timing, small frequency drift and time drift. That is, such terminal devices cannot maintain an accurate local oscillation signal at a desired frequency for a long time. Therefore, an urgent problem to be solved is how to obtain the clock of the local to-be-transmitted local signals in low power and low cost way.

In particular, for some WiFi communication scenarios, the access point (AP) cannot send signals on multiple channels at the same time. For example, the RFID protocol requires that communication can only occupy one signal, and the leakage restriction condition of adjacent channels must be met. In this scenario, the AP may only send signals through time division multiplexing (TDM). There is currently no solution for how the terminal in the TDM communication scenario can obtain the clock of the to-be-transmitted local signal by using a low power and low cost method.

In view of this, an embodiment of the present disclosure provides a method for clock determination, in which a network device may send different signals to a terminal device, so that the terminal device can determine a clock of a to-be-transmitted signal of the terminal device based on difference information between the received different signals. In this way, the terminal device can generate a precise local clock without using a high-precision crystal oscillator, and thus the power consumption and cost of the terminal device can be reduced.

In order to facilitate understanding of the technical solutions of the embodiments of the present disclosure, the technical solutions of the present disclosure will be described in detail below with reference to specific examples. As an optional solution, the above related technologies may be arbitrarily combined with the technical solutions of the embodiments of the present disclosure, and all of them belong to the scope of protection of the embodiments of the present disclosure. The embodiments of the present disclosure include at least some of the following.

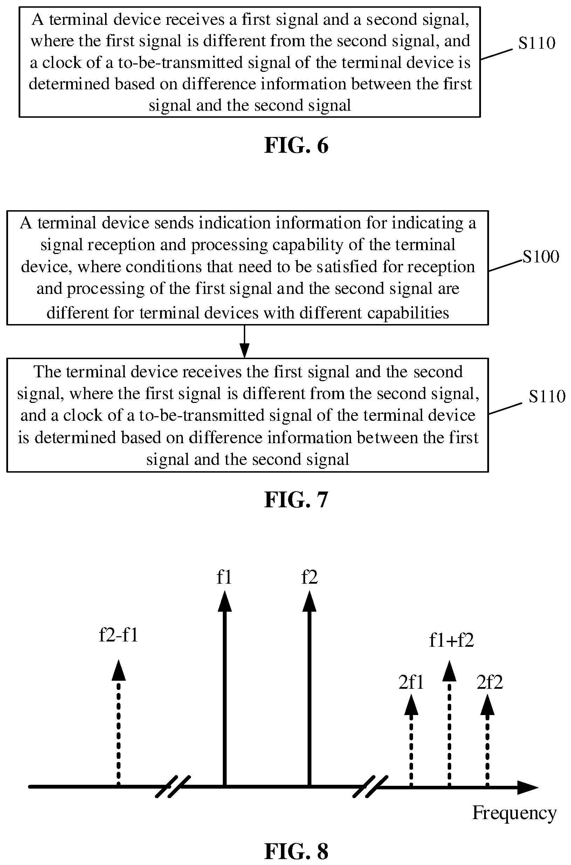

FIG. 6 illustrates a method for clock determination according to an embodiment of the present disclosure, and the method may include operation S110.

At S110, a terminal device receives a first signal and a second signal, where the first signal is different from the second signal, and a clock of a to-be-transmitted signal of the terminal device is determined based on difference information between the first signal and the second signal.

It is to be noted that the first signal being different from the second signal may mean that the frequency of the first signal and the frequency of the second signal are different, and/or that the reception time of the first signal and the reception time of the second signal are different.

In one possible implementation, the terminal device may receive the first signal and the second signal at the same frequency but in different time units, respectively.

In another possible implementation, the terminal device may respectively receive the first signal and the second signal in the same time unit but at different frequencies, respectively.

In yet another possible implementation, the terminal device may receive the first signal and the second signal at different frequencies and in different time units, respectively.

It can be understood that the terminal device may receive different signals, and determine the clock of the to-be-transmitted signal of the terminal device based on the difference information between the different signals.

It is to be noted that the difference information may refer to frequency difference information between different signals and/or reception time difference information between different signals.

It is to be noted that the clock of the to-be-transmitted signal of the terminal device may also be referred to as the local clock of the terminal device, and the two are equivalent to or may be replaced with each other.

It should also be noted that the "first signal" and the "second signal" in the embodiment of the present disclosure are only used for distinguishing different signals, the number of different signals received by the terminal device and the number of signals used for the terminal device to determine the clock of the to-be-transmitted signal are not limited in the embodiment of the present disclosure. That is, the terminal device may also receive three different signals and determine the clock of the to-be-transmitted signal based on the difference information among the three signals; or the terminal device may receive another number of signals and determine the clock of the to-be-transmitted signal based on the difference information between the another number of signals, which is not limited in the embodiment of the present disclosure.

In practical applications, the clock signal can be superimposed when the signal is sent. After the terminal device receives the signal, it can extract the clock from the received signal. This process is usually called the clock regeneration or the clock recovery. In the embodiment of the present disclosure, the terminal device may determine the clock of the to-be-transmitted signal of the terminal device based on the difference information in frequency and/or reception time between the different received signals, and in combination with the clocks of the different signals.

It should be noted that the method for clock determination according to the implementation of the present disclosure may be applied to various communication scenarios, such as the cellular communication scenario and the WiFi communication scenario. In particular, in the TDM-based communication scenario, the network sends signals of different frequencies to the terminal device at different moments through the TDM mode, and when the method for clock determination provided in the embodiment of the present disclosure is applied to this scenario, the terminal device may determine the clock of the to-be-transmitted signal based on the frequency difference and/or reception time difference between the different signals received.

Thus, in the method for clock determination provided by the embodiment of the present disclosure, the terminal device may determine the clock of the to-be-transmitted signal of the terminal device based on the difference information between different received signals. In this way, the terminal device can generate a precise local clock without using a high-precision crystal oscillator, and thus the power consumption and cost of the terminal device is reduced.

In some embodiments, the terminal device mentioned in the embodiment of the present disclosure may be a terminal having low power, low complexity, and low cost. Such a low-power, low-complexity, and low-cost terminal device may be a zero-power terminal (for example, an ambient power-enabled (AMP) IoT terminal based on ambient power), a low-power terminal, a low-cost terminal, a low-capability terminal (for example, a Redcap UE), or the like, which is not limited in the embodiment of the present disclosure.

The zero-power terminal may include an ambient power-based terminal device, that is, an AMP IoT terminal. The ambient power may include wireless radio frequency power, solar power, thermal power, mechanical power, kinetic power, and the like. From the perspective of power harvesting, the zero-power terminal can also be referred to as an energy harvesting device, which can obtain the energy required for communication, and can support the backscatter communication and/or active transmission communication.

In an embodiment of the present disclosure, the terminal device may receive the first signal and the second signal that are sent by the network device.

The network device may be a node that communicates with the terminal device. For example, the network device may be an AP in a WiFi system or a base station in a cellular system, or may be an IoT node, a sensor in an IoT, or the like, which is not limited in the embodiment of the present disclosure.

It is noted that when the terminal device is an AMP IoT terminal, the network device may include an AMP energizer.

In some embodiments, the first signal and the second signal may come from the same network device or may come from different network devices, which is not limited in the embodiment of the present disclosure.

That is, the terminal device may receive the first signal and the second signal respectively sent by the same network device, or the terminal device may also receive the first signal sent by one network device (which may be referred to as the first network device in the embodiment of the present disclosure) and receive the second signal sent by another network device (which may be referred to as the second network device in the embodiment of the present disclosure).

Exemplarily, the terminal device may receive the first signal and the second signal respectively sent by an AMP energizer; or the terminal device may receive the first signal and the second signal respectively sent by the AP. Alternatively, the terminal device may receive the first signal sent by the AMP energizer and receive the second signal sent by the AP; or the terminal device may receive the first signal set by the AP and receive the second signal sent by the AMP energizer.

In some embodiments, the first signal and the second signal may be used to wake up the terminal device or supply power to the terminal device.

That is, the first signal and the second signal may be a power supply signal or a wake-up signal.

It can be understood that the terminal device having low power, low complexity, and low cost can remain in the sleep state, communicate with the network device only after being awakened, and enter the sleep state again after the communication is completed, which facilitate further reducing the power consumption of the terminal device. In addition, for an ambient power-enabled terminal device, it can harvest ambient power to obtain energy for subsequent communication.

Therefore, in order to ensure normal communication of the terminal device, the first signal and the second signal may be signals that are used for waking up the terminal device, such as a wake-up signal. The first signal and the second signal may also be signals that are used for supply power to the terminal device, for example power supply signals.

It is to be noted that the first signal and the second signal may have the same functions, and for example, both of them may be used to wake up the terminal device, or both of them may be used to supply power to the terminal device. The functions of the first signal and the second signal may also be different, for example, the first signal is used to wake up the terminal device, and the second signal is used to supply power to the terminal device; or the first signal is used to supply power to the terminal device, and the second signal is used to wake up the terminal device, which is not limited in the embodiment of the present disclosure.

In some embodiments, the signal types of the first signal and the second signal may include a plurality of types. The first signal and/or the second signal may be one or more of a single-tone (SINE) signal, a reference signal, a synchronization signal, or a narrowband signal.

It will be appreciated that the first signal and the second signal may be single-tone signals, i.e. signals having only one constant frequency. The first signal and the second signal may be single-tone sine wave signals or single-tone cosine wave signals, which are not limited in the embodiment of the present disclosure.

The first signal and the second signal may also be narrowband signals, i.e. signals having a small frequency range. Exemplarily, the narrowband signal may be a global system for mobile communications (GSM) signal. The first signal and the second signal may be narrowband continuous wave signals or narrowband discontinuous wave signals, which are not limited in the embodiment of the present disclosure.

In some embodiments, the first signal and the second signal may also be related signals specified in 3GPP.

In an example, the first signal and the second signal may be reference signals, such as a channel state information reference signal (CSI-RS), a cell-specific reference signal (CRS), a positioning reference signal, a phase tracking reference signal, and the like, which are not limited in the embodiment of the present disclosure.

In an example, the first signal and the second signal may also be synchronization signals, such as a synchronization signal and PBCH block (SSB) in NR, a primary synchronization signal (PSS) and a secondary synchronization signal (SSS) in LTE, and the like, which are not limited in the embodiment of the present disclosure.

When clock regeneration or clock recovery is performed on the first signal and/or the second signal, the requirements for the terminal device are simpler for a single-tone sine wave signal. Related operations may need to be performed for the narrowband signal, resulting in higher computational complexity, and accordingly, the requirements for the terminal device will also be higher.

It should also be noted that the signal types of the first signal and the second signal may be the same, for example, both of them are single-tone signals/reference signals/synchronization signals/narrowband signals. The functions of the first signal and the second signal may also be different, for example, the first signal is a single-tone signal and the second signal is a reference signal; or the first signal is a reference signal and the second signal is a single-tone signal, which is not limited in the embodiment of the present disclosure.

In some embodiments, the first signal and the second signal may be signals in the intra-band or signals in the inter-band, which is not limited in the embodiment of the present disclosure.

Exemplarily, the first signal and the second signal may be signals in different bandwidth parts (BWP), or the first signal and the second signal may be signals on different subcarriers of the same carrier, or the first signal and the second signal may also be signals in different physical resource blocks (PRB), which are not limited in the embodiments of the present disclosure.

It can be seen that in the embodiment of the present disclosure, there may be a plurality of functions, types, and frequency bands for the first signal and the second signal, and the first signal and the second signal may be flexibly set to facilitate the terminal device in obtaining the clock of the to-be-transmitted signal.

In an embodiment of the present disclosure, in order to ensure that the terminal device successfully acquires the clock of the to-be-transmitted signal based on the difference information between the first signal and the second signal as much as possible, the first signal and the second signal need to satisfy certain conditions.

The first signal and the second signal need to satisfy one or more of the following conditions:
a difference between a power of the first signal and a power of the second signal being less than or equal to a first threshold;
a frequency interval between the frequency of the first signal and the frequency of the second signal being less than or equal to a second threshold; or
a time interval between the reception time of the first signal and the reception time of the second signal being less than or equal to a third threshold.

It can be understood that the terminal device acquires the clock of the to-be-transmitted signal based on the difference information between the first signal and the second signal, and thus the terminal device is required to perform signal monitoring in different time domains and/or frequency domains, or in other words, the terminal device is required to be able to switch between different radio frequency monitoring resources.

In fact, the capability of the terminal device is limited, and in order to reduce the implementation complexity of the terminal device, it may be configured that the power difference (power balance/AGC processing capability) between the first signal and the second signal received by the terminal device is less than or equal to a certain threshold (denoted as a first threshold in the embodiment of the present disclosure), and/or that the frequency interval between the first signal and the second signal is less than or equal to a certain threshold (denoted as a second threshold in the embodiment of the present disclosure), and/or that the time interval (or referred to as the maximum reception time difference (MRTD)) between the first signal and the second signal is less than or equal to a certain threshold (denoted as a third threshold in the embodiment of the present disclosure). In this way, the terminal device can switch the radio frequency monitoring resources only in a limited range, thereby reducing the implementation complexity of the terminal device.

It should be noted that the conditions that need to be satisfied by the corresponding first signal and second signal may vary for different terminal devices due to their signal reception and processing capabilities.

That is, the conditions that the first signal and the second signal need to satisfy can reflect the signal reception and processing capability of a terminal device to a certain extent. The stronger the signal reception and processing capability of the terminal device is, the greater the difference between the first signal and the second signal that the terminal device can receive and process, and correspondingly the first threshold, the second threshold, and the third threshold are larger. Conversely, the weaker the signal reception and processing capability of the terminal device, the smaller the difference between the first signal and the second signal that the terminal device can receive and process, and correspondingly the first threshold, the second threshold, and the third threshold are smaller. In particular, at least for a power difference and/or a time difference between two signals, smaller power difference and/or the time difference leads to lower the complexity in signal reception and processing of the terminal device.

In some embodiments, terminal devices may be divided into different capability levels/types based on different values of the first threshold, the second threshold, and the third threshold corresponding to the terminal devices.

Exemplarily, terminal devices may be divided into high-capability terminal devices and low-capability terminal devices, where the high-capability terminal devices can switch in a larger frequency range and/or time domain range and have a strong signal reception and processing capabilities. However, the low-capability terminals may switch in a smaller frequency range and/or time domain range, and have weak signal reception and processing capabilities. Accordingly, the first threshold corresponding to the high-capability terminal device may be greater than the first threshold corresponding to the low-capability terminal device, and/or the second threshold corresponding to the high-capability terminal device may be greater than the second threshold corresponding to the low-capability terminal device, and/or the third threshold corresponding to the high-capability terminal device may be greater than the third threshold corresponding to the low-capability terminal device.

It is to be noted that when dividing terminal devices into different capability levels/types, the division may be based on one or more of the first threshold, second threshold and third threshold corresponding to the terminal devices. Exemplarily, terminal devices may be divided into different capability levels/types only based on different values of the first threshold; or the terminal devices may be divided into different capability levels/types only based on different values of the second threshold; or the terminal devices may be divided into different capability levels/types only based on different values of the third threshold. In addition, the terminal device may be divided into different capability levels/types based on different values of the first threshold and the second threshold, or the terminal device may be divided into different capability levels/types based on different values of the first threshold and the third threshold, or the terminal devices may be divided into different capability levels/types based on different values of the second threshold and the third threshold. Of course, the terminal devices may be divided into different capability levels/types based on different values of the first threshold, the second threshold, and the third threshold.

In some embodiments, the first threshold, the second threshold, and the third threshold corresponding to the terminal devices of different capability levels/types may be shown in a table. Exemplarily, the first threshold, the second threshold, and the third threshold corresponding to terminal devices of different capability levels/types may be as shown in Table 1.

**Table 1**

| Capability Level/Type | Conditions for reception of the first signal and the second signal | | |
|---|---|---|---|
| | First threshold | Second threshold | Third threshold |
| 1 | 6dB | 10MHz | 260ns |
| 2 | 3dB | 2GHz | 260ns |
| 3 | 3dB | 80MHz | 160ms |
| ... | ... | ... | ... |

It is to be noted that Table 1 only shows different values of the first threshold, the second threshold, and the third threshold corresponding to terminal devices of different capability levels/types. In a practical application, terminal devices of different capability levels/types may be divided based on only at least one of the first threshold, the second threshold, and the third threshold. That is, terminal devices of different capability levels/types may be indicated based on one or more of the second to fourth columns (that is, columns corresponding to the first threshold, the second threshold, and the third threshold) in Table 1.

In an embodiment of the present disclosure, referring to FIG. 7, in the method for clock determination provided by the embodiment of the present disclosure, before the operation S110 where the terminal device receives the first signal and the second signal, the following operation S100 may be further executed.

At S100, the terminal device sends indication information for indicating a signal reception and processing capability of the terminal device, where conditions that need to be satisfied for reception and processing of the first signal and the second signal are different for terminal devices with different capabilities.

It can be understood that conditions that need to be satisfied by the corresponding first signal and second signal may vary for different terminal devices due to their signal reception and processing capabilities. Before receiving the first signal and the second signal, the terminal device may send indication information to the network device. The signal reception and processing capability of the terminal device is notified to the network device through the indication information, so that the network device can send an appropriate first signal and second signal to the terminal device based on the signal reception and processing capability of the terminal device.

In some embodiments, the indication information may contain index information of the capability levels/types of the terminal devices, and the index information indicates the signal reception and processing capabilities of the terminal devices.

Exemplarily, referring to Table 1, when the bit value of the indication information is mapped to 0, it may be indicated that the capability level/type of the terminal device is capability level/type 1. When the bit value of the indication information is mapped to 1, it may indicate that the capability level/type of the terminal device is capability level/type 2. When the bit value of the indication information is mapped to 2, it may indicate that the capability level/type of the terminal device is capability level/type 3.

It can be understood that after receiving the indication information, the network device may determine conditions that need to be satisfied for reception and processing of the first signal and the second signal corresponding to the terminal device based on the index information of the capability level/type carried in the indication information, that is, determine the first threshold, the second threshold, and the third threshold supported by the terminal device, so as to send an appropriate first signal and second signal to the terminal device.

It is to be noted that in the embodiment of the present disclosure, the values of the first threshold, the second threshold, and the third threshold corresponding to each capability level/type may be predefined. In addition, the values of the first threshold, the second threshold, and the third threshold corresponding to each capability level/type may be reported by the terminal device to the network device in advance, and this is not limited in the embodiment of the present disclosure.

In some embodiments, the indication information may directly contain specific values of one or more of the first threshold, the second threshold, and the third threshold supported by the terminal device. The specific values of the first threshold, the second threshold, and the third threshold are used to indicate the signal reception and processing capability of the terminal device.

Correspondingly, after receiving the indication information, the network device may directly send an appropriate first signal and second signal to the terminal device based on the first threshold, the second threshold, and the third threshold supported by the terminal device.

In some embodiments, since the conditions that need to be satisfied for reception and processing of the first signal and the second signal are different for terminal devices with different capabilities, the network device may respectively wake up the terminal devices with different signal receiving and processing capabilities by setting the difference between the first signal and the second signal. That is, the network device may directionally activate terminal devices with different signal reception and processing capabilities by using the first signal and the second signal, thereby improving the flexibility of system communication.

Exemplarily, taking Table 1 as an example, if the network device needs to wake up the terminal device of the capability level/type 1, it may configure that the power difference between the first signal and the second signal is less than or equal to 6dB, the frequency interval between the first signal and the second signal is less than or equal to 10MHz, and the time interval between the first signal and the second signal is less than 260ns. If the network device needs to wake up the terminal device of capability level/type 2 within the communication coverage range, it may configure that the power difference between the first signal and the second signal is less than 3dB, the frequency interval between the first signal and the second signal is more than 80MHz and less than or equal to 2GHz, and the time interval between the first signal and the second signal is less than 260ns. If the network device needs to wake up all terminal devices within the communication coverage range, it may configure that the power difference between the first signal and the second signal is less than 3dB, the frequency interval between the first signal and the second signal is less than or equal to 10MHz, and the time interval between the first signal and the second signal is less than 260ns.

Hereinafter, an implementation that the terminal device determines the clock of the to-be-transmitted signal based on the difference information between the first signal and the second signal will be described in detail.

In an embodiment of the present disclosure, the clock of the to-be-transmitted signal of the terminal device may be determined by one or more of the following:
the clock of the to-be-transmitted signal being determined based on frequency difference information between the frequency of the first signal and the frequency of the second signal;
the clock of the to-be-transmitted signal being determined based on time difference information between the reception time of the first signal and the reception time of the second signal; or
the clock of the to-be-transmitted signal being determined based on an association between a first clock of the first signal and a second clock of the second signal.

It is to be noted that the frequency of the to-be-transmitted signal may be different from the frequency of the first signal and the frequency of the second signal. In an example, the frequency of the first signal is 915MHz, the frequency of the second signal is 920MHz, and the frequency of the to-be-transmitted signal may be 2.4GHz. In another example, the frequency of the first signal is 920MHz, the frequency of the second signal is 2.412GHz, and the frequency of the to-be-transmitted signal may be 600MHz. In another example, the frequency of the first signal is 2.402GHz, the frequency of the second signal is 2.426GHz, and the frequency of the to-be-transmitted signal may be 2.480GHz.

In one possible implementation, the clock of the to-be-transmitted signal being determined based on frequency difference information between the frequency of the first signal and the frequency of the second signal, may be realized by:
performing frequency mixing or multiplication on a frequency difference between a correlation signal of the first signal and a correlation signal of the second signal to obtain a third signal, where the correlation signal is an intermediate frequency signal of the first signal, an intermediate frequency signal of the second signal, a zero frequency signal of the first signal, a zero frequency signal of the second signal, or a high-order component signal after cross modulation or inter modulation of the first signal and the second signal; and
determining the clock of the to-be-transmitted signal based on a clock of the third signal.

It can be understood that in a case where there is a difference between the frequency of the first signal and the frequency of the second signal (where the reception time of the first signal and the reception time of the second signal are the same or different), the terminal device may process the first signal and the second signal to obtain the third signal. The third signal may be related to the to-be-transmitted signal, for example, the frequency of the third signal may be a multiple of the frequency of the to-be-transmitted signal, or the frequency of the third signal may be a divisor of the to-be-transmitted signal.

In some embodiments, processing the first signal and the second signal may be implemented by: obtaining the intermediate frequency signal/zero frequency signal of the first signal, obtaining the intermediate frequency signal/zero frequency signal of the second signal, and performing frequency mixing or multiplication on the intermediate frequency signal/zero frequency signal of the first signal and the intermediate frequency signal/zero frequency signal of the second signal to obtain the third signal.

In some embodiments, processing the first signal and the second signal may be implemented by: performing cross modulation or inter modulation on the first signal and the second signal, and performing frequency mixing or multiplication on the signal(s) obtained after the cross modulation or inter modulation to obtain the third signal.

It should be noted that inter modulation is a process that occurs in nonlinear devices or propagation media, where the spectral components of one or more input signals interact to generate new components whose frequencies are a linear combination of integer multiples of the frequencies of each input signal component. In addition, the cross modulation refers to the modulation of desired signals by undesired signals generated by the interaction of signals in nonlinear devices, electrical networks or propagation media.

In practical applications, when the input signal passes through a nonlinear transmission network (due to the nonlinear characteristic of the radio frequency device), harmonic components will be generated. These harmonic components are integer multiples of the fundamental frequency f, such as 2f, 3f, 4f, etc. Generally speaking, at higher frequencies, the amplitude of these harmonics gradually decreases.

Exemplarily, when two radio frequency signals f1 and f2 pass through a passive device, inter modulation signals of orders such as 2nd, 3rd, 4th, 5th, 6th, and 7th will be generated, and 2nd-order inter modulation signals with frequencies 2f1, 2f2, (f1+f2) and (f2-f1) will also be generated. Referring to the schematic diagram of the 2nd-order inter modulation results shown in FIG. 8, f1+f2 and f2-f1 are 2nd-order inter modulation components, which can be represented by IM2 (f2-f1) and IM2 (f1+f2).

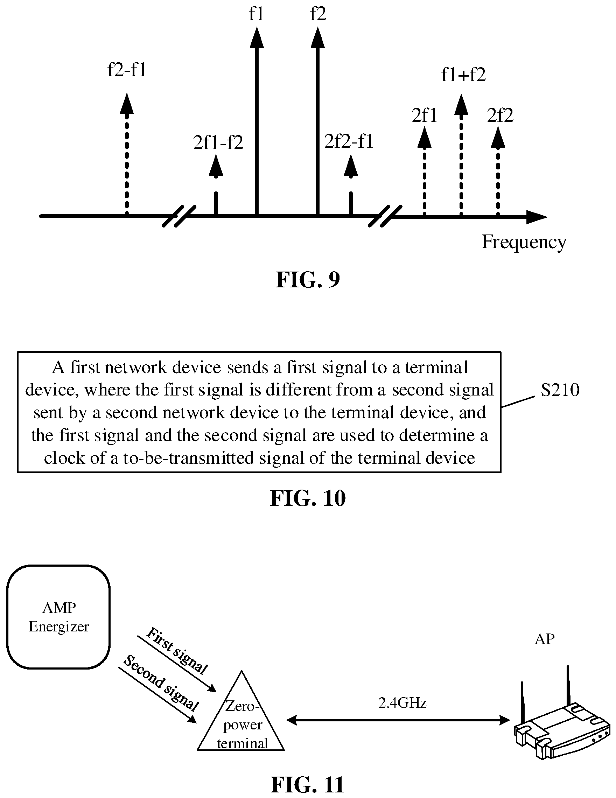

If the 2nd-order signal components 2f1 and 2f2 are mixed with the 1st-order signal components f1 and f2, new frequencies will be obtained, two of which are: (2f1-f2), (2f2-f1), which are called 3rd-order inter modulation components. FIG. 9 illustrates a schematic diagram of 3rd-order inter modulation results.

Further, after obtaining the third signal, the terminal device may perform clock regeneration or clock recovery on the third signal to obtain a clock of the third signal. The terminal device may obtain the clock of the third signal from the third signal by using the digital phase locked loop. Further, the terminal device may obtain the clock of the to-be-transmitted signal based on the clock of the third signal and the relationship between the third signal and the to-be-transmitted signal.

In another possible implementation, the clock of the to-be-transmitted signal being determined based on time difference information between the reception time of the first signal and the reception time of the second signal, may be further realized by:
performing a correlation operation on the first signal and the second signal based on the time difference information to obtain correlation information between the first signal and the second signal; and
determining the clock of the to-be-transmitted signal based on the correlation information.

It can be understood that when there is a difference between the reception time of the first signal and the reception time of the second signal, and in particular when the first signal and the second signal are periodic signals (for example, the first signal is an SSB with period 1 and the second signal is an SSB with period 2), the terminal device may perform a correlation operation on the first signal and the second signal, and determine the clock of the to-be-transmitted signal based on the correlation operation result.

In yet another possible implementation, the clock of the to-be-transmitted signal being determined based on an association between a first clock of the first signal and a second clock of the second signal, may be implemented by:
extracting a first clock of the first signal and a second clock of the second signal; and
determining the clock of the to-be-transmitted signal based on a first association relationship, the first clock and the second clock, where the first association relationship is determined based on a frequency relationship among the first signal, the second signal, and the to-be-transmitted signal.

It can be understood that in this implementation, the terminal device may first perform clock regeneration or clock extraction on the first signal and the second signal respectively, to obtain a first clock of the first signal and a second clock of the second signal.

The association relationship among the frequencies of the first signal, the second signal and the to-be-transmitted signal may reflect the association relationship among the first clock, the second clock and the clock of the to-be-transmitted signal to a certain extent. Therefore, after obtaining the first clock of the first signal and the second clock of the second signal, the terminal device may obtain the association relationship among the first clock, the second clock, and the clock of the to-be-transmitted signal based on the association relationship among the frequencies of the first signal, the second signal, and the to-be-transmitted signal. In this way, the terminal device can obtain the clock of the to-be-transmitted signal based on the association relationship among the first clock, the second clock, and the clock of the to-be-transmitted signal, as well as the first clock and the second clock.

It should be noted that the terminal device may determine the clock of the to-be-transmitted signal by selecting one of the above three implementations based on the specific difference between the first signal and the second signal. Exemplarily, if the reception times of the first signal and the second signal are the same, but there is a difference in frequencies between the first signal and the second signal, the terminal device may determine the clock of the to-be-transmitted signal using the first implementation described above. If the frequencies of the first signal and the second signal are the same, but the reception times of the first signal and the second signal are separated by a preset period, the terminal device may determine the clock of the to-be-transmitted signal by using the second implementation method. If there are differences both in the frequency and the reception time between the first signal and the second signal, the terminal device may determine the clock of the to-be-transmitted signal by using the third implementation. In addition, when there are differences in both the frequency and the reception time between the first signal and the second signal, the terminal device may determine the clock of the to-be-transmitted signal by using the above three implementation methods respectively to obtain three clocks, and then the terminal device may obtain the average value of the three clocks to obtain the final clock of the to-be-transmitted signal. The specific implementation of the terminal device is not limited in the embodiment of the present disclosure.

In summary, in the method for clock determination according to the embodiment of the present disclosure, the terminal device may determine the clock of the to-be-transmitted signal of the terminal device based on the difference information between different received signals. In this way, the terminal device can generate a precise local clock without using a high-precision crystal oscillator, and thus the power consumption and cost of the terminal device can be reduced.

The communication method according to the embodiment of the present disclosure has been described in detail above from the perspective of the terminal device with reference to FIG. 6 and FIG. 7, and the communication method according to the embodiment of the present disclosure will be described in detail below from the perspective of the network device with reference to FIG. 10. It should be understood that the operations performed by the network device correspond to the operations performed by the terminal device, descriptions of which will be omitted hereinafter for the sake of brevity.

FIG. 10 illustrates a method for clock determination according to an embodiment of the present disclosure, and the method may include operation S210.

At S210, a first network device sends a first signal to a terminal device, where the first signal is different from a second signal sent by a second network device to the terminal device, and the first signal and the second signal are used to determine a clock of a to-be-transmitted signal of the terminal device.

In some embodiments, the first network device and the second network device may be the same network device or different network devices, which is not limited in the embodiments of the present disclosure. That is, the terminal device may receive the first signal and the second signal respectively sent by the same network device, or the terminal device may also receive the first signal sent by one network device (which may be referred to as the first network device in the embodiment of the present disclosure) and receive the second signal sent by another network device (which may be referred to as the second network device in the embodiment of the present disclosure).

In some embodiments, the first network device and the second network device may be nodes that communicate with the terminal device. For example, the first network device and the second network device may be APs in the WiFi system or base stations in the cellular system, or may be devices such as IoT nodes or sensors in the IoT, which are not limited in the embodiment of the present disclosure.

It is to be noted that when the terminal device is an AMP IoT terminal, the first network device and the second network device may include an AMP energizer.

Exemplarily, the first network device and the second network device may be the same AMP energizer, and the AMP energizer may send the first signal and the second signal to the terminal device respectively. The first network device and the second network device may be two different AMP energizers, the AMP energizer 1 sends the first signal to the terminal device, and the AMP energizer 2 sends the second signal to the network device. Further, the first network device may be an AMP energizer, and the second network device may be an AP, where the AMP energizer sends the first signal to the terminal device, and the AP may send the second signal to the terminal device.

It is to be noted that the first signal being different from the second signal may mean that the frequency of the first signal and the frequency of the second signal are different, and/or that the reception time of the first signal and the reception time of the second signal are different.

In one possible implementation, the first network device and the second network device may send the first signal and the second signal at the same frequency but in different time units, respectively.

In another possible implementation, the first network device and the second network device may send the first signal and the second signal in the same time unit but at different frequencies, respectively.

In yet another possible implementation, the first network device and the second network device may send the first signal and the second signal at different frequencies and in different time units, respectively.

In this way, the terminal device may receive different signals, and determine the clock of the to-be-transmitted signal of the terminal device based on the difference information between the different signals. The difference information herein may refer to the frequency difference information and/or the reception time difference information between different signals.

It is to be noted that in a case where the first network device and the second network device are different network devices, when it is necessary to send a signal to the terminal device to enable the terminal device to determine the clock of the to-be-transmitted signal, the first network device and the second network device may also negotiate to determine the frequency and/or transmission time of the first signal and the second signal.

It should also be noted that the "first signal" and the "second signal" in the embodiment of the present disclosure are only used for distinguishing different signals, and the number of different signals sent by the network device and the number of signals used to determine the clock of the to-be-transmitted signal are not limited in the embodiment of the present disclosure. That is, the network device may send three different signals (where the three different signals may be sent by the same network device or may be sent by different network devices) to enable that the terminal device determines the clock of the to-be-transmitted signal based on the difference information between the three signals. Alternatively, the network device may send another number of different signals (where the different signals may be sent by the same network device or different network devices), to enable that the terminal device can determine the clock of the to-be-transmitted signal based on the difference information between the another number of signals, which is not limited in the embodiment of the present disclosure.

In practical applications, the network device can superimpose the clock signal in the transmitted signal, enabling that the terminal device can extract the clock from the received signal upon reception. This process is usually called the clock regeneration or the clock recovery. In the embodiment of the present disclosure, the terminal device may determine the clock of the to-be-transmitted signal of the terminal device based on the difference information in frequency and/or reception time of the different received signals, and in combination with the clocks of the different signals.

In the method for clock determination provided by the embodiment of the present disclosure, the network device may send different signals to the terminal device, and the terminal device may determine the clock of the to-be-transmitted signal of the terminal device based on the difference information between the received different signals. In this way, the terminal device may generate a precise local clock without using a high-precision crystal oscillator, and thus the power consumption and cost of the terminal device are reduced.

In some embodiments, the first signal and the second signal may be used to wake up the terminal device or to supply power to the terminal device.

That is, the first signal and the second signal may be a power supply signal or a wake-up signal.

It can be understood that the terminal device having low power, low complexity, and low cost can maintain in the sleep state, communicate with the network device only after being awakened, and enter the sleep state again after the communication is completed, which facilitates further reducing the power consumption of the terminal device. In addition, for an ambient power-enabled terminal device, it can harvest ambient power to obtain energy for subsequent communication.

Therefore, in order to ensure normal communication of the terminal device, the first signal and the second signal may be signals for waking up the terminal device, such as a wake-up signal. The first signal and the second signal may also be signals for supplying power to the terminal device, for example power supply signals.

It is to be noted that the first signal and the second signal may have the same functions, and for example, both of them may be used to wake up the terminal device, or both of them may be used to supply power to the terminal device. The functions of the first signal and the second signal may also be different, for example, the first signal is used to wake up the terminal device, and the second signal is used to supply power to the terminal device; or the first signal is used to supply power to the terminal device, and the second signal is used to wake up the terminal device, which is not limited in the embodiment of the present disclosure.

In some embodiments, the signal types of the first signal and the second signal may include a plurality of types. The first signal and/or the second signal may be one or more of a single-tone (SINE) signal, a reference signal, a synchronization signal, and a narrowband signal.

It will be appreciated that the first signal and the second signal may be single-tone signals, i.e. signals having only one constant frequency. The first signal and the second signal may be single-tone sine wave signals or single-tone cosine wave signals, which are not limited in the embodiment of the present disclosure.

The first signal and the second signal may also be narrowband signals, i.e. signals having a small frequency range. The first signal and the second signal may be narrowband continuous wave signals or narrowband discontinuous wave signals, which are not limited in the embodiment of the present disclosure.

In some embodiments, the first signal and the second signal may also be related signals specified in 3GPP.

In an example, the first signal and the second signal may be reference signals, such as a channel state information reference signal, a CSI-RS, a CRS, a positioning reference signal, a phase tracking reference signal, and the like, which are not limited in the embodiment of the present disclosure.

In an example, the second signal of the first signal may also be synchronization signals, such as the SSB in NR, the PSS in LTE, the SSS, and the like, which are not limited in the embodiment of the present disclosure.

It is to be noted that the signal types of the first signal and the second signal may be the same, and for example, both of them are single-tone signals/reference signals/synchronization signals/narrowband signals. The signal types of the first signal and the second signal may also be different, for example, the first signal is a single-tone signal and the second signal is a reference signal; or the first signal is a reference signal and the second signal is a single-tone signal, which is not limited in the embodiment of the present disclosure.

In some embodiments, the first signal and the second signal may be signals in the intra-band or signals in the inter-band, which is not limited in the embodiment of the present disclosure.

Exemplarily, the first signal and the second signal may be signals in different bandwidth parts (BWP), or the first signal and the second signal may be signals on different subcarriers of the same carrier, or the first signal and the second signal may also be signals of different physical resource blocks (PRB), which are not limited in the embodiments of the present disclosure.

It can be seen that in the embodiment of the present disclosure, there may be a plurality of functions, types, and frequency bands for the first signal and the second signal, and the network device may flexibly set the first signal and the second signal to facilitate the terminal device in obtaining the clock of the to-be-transmitted signal.

In some embodiments, the first signal and the second signal satisfy one or more of the following conditions:
a difference between a power of the first signal and a power of the second signal being less than or equal to a first threshold;
a frequency interval between the frequency of the first signal and the frequency of the second signal being less than or equal to a second threshold; or
a time interval between the reception time of the first signal and the reception time of the second signal being less than or equal to a third threshold.

In some embodiments, the first network device receives indication information sent by the terminal device, the indication information being used for indicating a signal reception and processing capability of the terminal device. Herein, conditions that need to be satisfied for reception and processing of the first signal and the second signal are different for terminal devices with different capabilities, and the first signal and the second signal are sent based on the indication information.

In some embodiments, since the conditions that need to be satisfied for reception and processing of the first signal and the second signal are different for terminal devices with different capabilities, the network device may respectively wake up the terminal devices with different signal receiving and processing capabilities by setting the difference between the first signal and the second signal. That is, the network device may directionally activate terminal devices with different signal reception and processing capabilities by using the first signal and the second signal, thereby improving the flexibility of system communication.

Exemplarily, taking Table 1 as an example, if the network device needs to wake up the terminal device of the capability level/type 1, it may configure that the power difference between the first signal and the second signal is less than or equal to 6 dB, the frequency interval between the first signal and the second signal is less than or equal to 10 MHz, and the time interval between the first signal and the second signal is less than 260 ns. If the network device needs to wake up the terminal device of capability level/type 2 within the communication coverage range, it may configure that the power difference between the first signal and the second signal is less than 3 dB, the frequency interval between the first signal and the second signal is more than 80 MHz and less than or equal to 2 GHz, and the time interval between the first signal and the second signal is less than 260 ns. If the network device needs to wake up all terminal devices within the communication coverage range, it may configure that the power difference between the first signal and the second signal is less than 3 dB, the frequency interval between the first signal and the second signal is less than or equal to 10 MHz, and the time interval between the first signal and the second signal is less than 260 ns.

Hereinafter, the method for clock determination provided by the embodiment of the present disclosure will be described with reference to specific application scenarios.

### Embodiment 1

In this embodiment, the zero-power terminal is a capability class/type 1 device. The conditions for reception and processing of the first signal and the second signal for the zero-power terminal need to satisfy one or more of the following:
the power difference between the first signal and the second signal cannot be greater than 6 dB;
the frequency interval between the first signal and the second signal cannot be greater than 10 MHz; or
the maximum reception time difference between the first signal and the second signal cannot be greater than 260 ns.

Referring to FIG. 11, the AMP energizer may send the first signal and the second signal to the zero-power terminal. The first signal and the second signal are power supply signals that are periodically or continuously sent by the AMP energizer. The frequency of the first signal may be 915 MHz, and the frequency of the second signal may be 920 MHz.

The zero-power terminal may simultaneously receive the first signal with the frequency of 915 MHz and the second signal with the frequency of 920 MHz, and extract a higher-order component after cross modulation or inter modulation of the two signals, such as an IM2 signal (5 MHz). Further, the zero-power terminal performs multiplication processing on the IM2 signal to obtain the clock of the to-be-transmitted signal with a frequency of 2.4 GHz. The to-be-transmitted signal may be a signal supporting all or part of protocol formats (such as the BLE, 802.11b/n protocol, and the like) of WiFi. After determining the clock of the to-be-transmitted signal, the zero-power terminal may communicate with the AP on the 2.4 GHz band.

### Embodiment 2

In this embodiment, the zero-power terminal is a capability class/type 2 device. The conditions for reception and processing of the first signal and the second signal for the zero-power terminal need to satisfy one or more of the following:
the power difference between the first signal and the second signal cannot be greater than 3 dB;
the frequency interval between the first signal and the second signal cannot be greater than 2 GHz;
the maximum reception time difference between the first signal and the second signal cannot be greater than 260 ns.

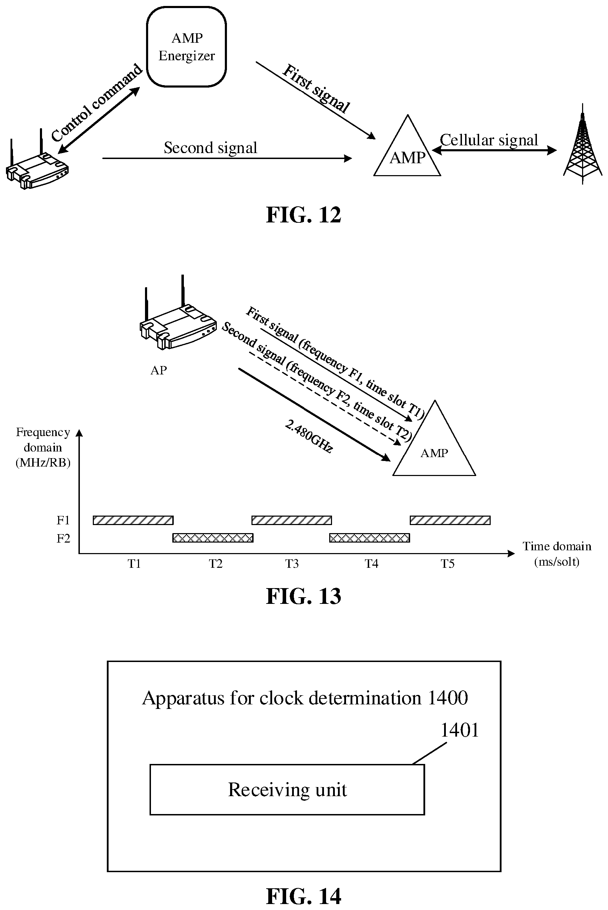

Referring to FIG. 12, the AMP energizer may send the first signal to the zero-power terminal under the control (through a control command) of AP, and the first signal is a power supply signal periodically or continuously sent by the AMP energizer. The AP sends a second signal to the zero-power terminal, and the second signal is a wake-up signal periodically or continuously sent by the AP. The frequency of the first signal may be 920 MHz, and the frequency of the second signal may be 2.412 GHz.

The zero-power terminal may simultaneously receive the first signal with the frequency of 920 MHz and the second signal with the frequency of 2.412 GHz, and obtain a higher-order component after cross modulation or inter modulation, such as an IM3 signal (2.412 GHz-920 MHz * 2). Further, the zero-power terminal performs envelope detection on the IM3 signal to obtain the clock of the to-be-transmitted signal (cellular signal) with a frequency of 600 MHz. After determining the clock of the to-be-transmitted signal, the zero-power terminal can communicate with the base station on the 600 MHz frequency band.

### Embodiment 3

In this embodiment, the zero-power terminal is a capability class/type 3 device. The conditions for reception and processing of the first signal and the second signal for the zero-power terminal need to satisfy one or more of the following:
the power difference between the first signal and the second signal cannot be greater than 3 dB;
the frequency interval between the first signal and the second signal cannot be greater than 80 MHz;
the maximum reception time difference between the first signal and the second signal cannot be greater than 160 ms.

Referring to FIG. 13, AP may sequentially and asynchronously send to a zero-power terminal a first signal (frequency F1, time slot T1) and a second signal (frequency F2, time slot T2) for waking up the zero-power terminal. The frequency of the first signal may be 2.402 GHz (e.g., channel 37 in the Bluetooth protocol) and the frequency of the second signal may be 2.426 GHz (e.g., channel 38 in the Bluetooth protocol).

The zero-power terminal may sequentially receive the first signal with the frequency of 2.402 GHz and the second signal with the frequency of 2.426 GHz to obtain an intermediate frequency signal at 2.4 GHz, and after mixing of the obtains intermediate frequency signals, obtain a clock of a to-be-transmitted signal at 2.480 GHz (for example, channel 39 in Bluetooth protocol). The to-be-transmitted signal may be a Bluetooth signal at 2.480 GHz.

The preferred embodiments of the present disclosure have been described in detail above with reference to the accompanying drawings, but the present disclosure is not limited to the specific details in the above-described embodiments. Within the scope of the technical concept of the present disclosure, a variety of simple modifications may be made to the technical solutions of the present disclosure, and these simple modifications all belong to the scope of protection of the present disclosure. For example, various specific technical features described in the above-described embodiments may be combined in any suitable manner without contradiction, and various possible combinations are not be described separately in the present disclosure in order to avoid unnecessary repetition. For example, various embodiments of the present disclosure may be combined arbitrarily, and as long as they do not contradict the idea of the present disclosure, they should be regarded as the disclosure of the present disclosure as well. For another example, various embodiments described in the present disclosure and/or the technical features in the embodiments may be arbitrarily combined with the prior art, and the technical solution obtained after the combination should also fall within the scope of protection of the present disclosure.

It should also be understood that in various method embodiments of the present disclosure, the magnitude of the serial numbers of the above-described processes does not mean an execution sequence, and the execution sequence of the processes should be determined by the functions and internal logics thereof, and should not constitute any limitation on the implementation of the embodiments of the present disclosure. In addition, in the embodiments of the present disclosure, the terms "downlink", "uplink" and "sidelink" indicate a transmission direction of a signal or data. The "downlink" indicates that the transmission direction of the signal or data is a first direction transmitted from a station to a user equipment of the cell, and the "uplink" indicates that the transmission direction of the signal or data is a second direction transmitted from the user equipment of the cell to the station. The "sidelink" indicates that a transmission direction of the signal or data is a third direction transmitted from the user equipment 1 to the user equipment 2. For example, "downlink signal" indicates that the transmission direction of the signal is the first direction. In addition, in the embodiments of the present disclosure, the term "and/or" is only one kind of association relationship describing associated objects, and indicates that there may be three relationships. Specifically, A and/or B may represent three cases: i.e., independent existence of A, existence of both A and B, and independent existence of B. In addition, the character "/" herein generally indicates that the associated objects before and after are in an "or" relationship.

FIG. 14 is a schematic structural composition diagram of an apparatus for clock determination 1400 according to an embodiment of the present disclosure, which is applied to a terminal device. As shown in FIG. 14, the apparatus for clock determination 1400 includes a receiving unit 1401.

The receiving unit 1401 is configured to receive a first signal and a second signal. The first signal is different from the second signal, a clock of a to-be-transmitted signal of the terminal device is determined based on difference information between the first signal and the second signal.

In some embodiments, the frequency of the first signal is different from the frequency of the second signal, and/or the reception time of the first signal is different from the reception time of the second signal.

In some embodiments, the first signal and the second signal satisfy one or more of the following conditions:
a difference between a power of the first signal and a power of the second signal being less than or equal to a first threshold;
a frequency interval between the frequency of the first signal and the frequency of the second signal being less than or equal to a second threshold; or
a time interval between the reception time of the first signal and the reception time of the second signal being less than or equal to a third threshold.

In some embodiments, the apparatus for clock determination 1400 may further include a sending unit configured to send indication information for indicating a signal reception and processing capability of the terminal device. Herein, conditions that need to be satisfied for reception and processing of the first signal and the second signal are different for terminal devices with different capabilities, and the first signal and the second signal are sent based on the indication information.

In some embodiments, the first signal and/or the second signal is used to wake up the terminal device or supply power to the terminal device.

In some embodiments, the first signal and the second signal are from the same network device, or from different network devices.

In some embodiments, the first signal and/or the second signal is any one of the following:
a single-tone signal;
a reference signal;
a synchronization signal; or
a narrowband signal.

In some embodiments, the first signal and the second signal are signals in an intra-band or signals in an inter-band.

In some embodiments, the clock of the to-be-transmitted signal of the terminal device being determined based on the difference information between the first signal and the second signal, includes one or more of the following:
the clock of the to-be-transmitted signal being determined based on frequency difference information between the frequency of the first signal and the frequency of the second signal;
the clock of the to-be-transmitted signal being determined based on time difference information between the reception time of the first signal and the reception time of the second signal; or
the clock of the to-be-transmitted signal being determined based on an association between a first clock of the first signal and a second clock of the second signal.

In some embodiments, the clock of the to-be-transmitted signal being determined based on the frequency difference information between the frequency of the first signal and the frequency of the second signal, is implemented by:
performing frequency mixing or multiplication on a frequency difference between a correlation signal of the first signal and a correlation signal of the second signal to obtain a third signal; where the correlation signal is an intermediate frequency signal of the first signal, an intermediate frequency signal of the second signal, a zero frequency signal of the first signal, a zero frequency signal of the second signal, or a high-order component signal after cross modulation or inter modulation of the first signal and the second signal; and
determining the clock of the to-be-transmitted signal based on a clock of the third signal.

In some embodiments, the clock of the to-be-transmitted signal being determined based on the time difference information between the reception time of the first signal and the reception time of the second signal, is implemented by:
performing a correlation operation on the first signal and the second signal based on the time difference information to obtain correlation information between the first signal and the second signal; and
determining the clock of the to-be-transmitted signal based on the correlation information.

In some embodiments, the clock of the to-be-transmitted signal being determined based on the association between the first clock of the first signal and the second clock of the second signal, includes:
extracting a first clock of the first signal and a second clock of the second signal; and
determining the clock of the to-be-transmitted signal based on a first association relationship, the first clock and the second clock, where the first association relationship is determined based on a frequency relationship among the first signal, the second signal, and the to-be-transmitted signal.

In some embodiments, the terminal device is one or more of a zero-power terminal, a low-power terminal, a low-cost terminal, or a low-capability terminal.

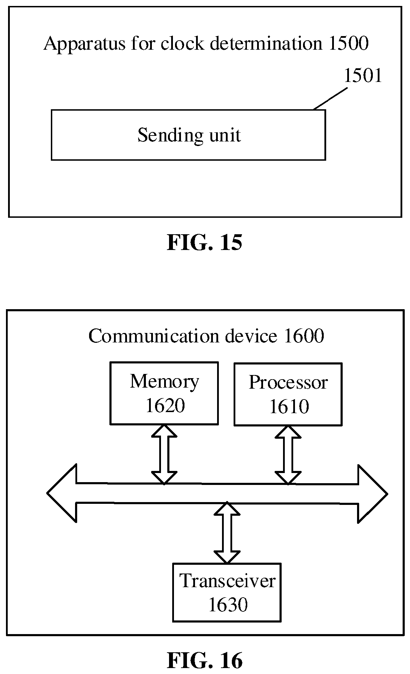

FIG. 15 is a schematic structural composition diagram of an apparatus for clock determination 1500 according to an embodiment of the present disclosure, which is applied to a first network device. As shown in FIG. 15, the apparatus for clock determination 1500 includes a sending unit 1501.

The sending unit 1501 is configured to send a first signal to the terminal device, where the first signal is different from a second signal sent by a second network device to the terminal device, and the first signal and the second signal are used to determine a clock of a to-be-transmitted signal by the terminal device.

In some embodiments, the frequency of the first signal is different from the frequency of the second signal, and/or the reception time of the first signal is different from the reception time of the second signal.

In some embodiments, the first signal and the second signal satisfy one or more of the following conditions:
a difference between a power of the first signal and a power of the second signal being less than or equal to a first threshold;
a frequency interval between the frequency of the first signal and the frequency of the second signal being less than or equal to a second threshold; or
a time interval between the reception time of the first signal and the reception time of the second signal being less than or equal to a third threshold.

In some embodiments, the apparatus for clock determination 1500 may further include a receiving unit configured to receive indication information sent by the terminal device, the indication information be used for indicating a signal reception and processing capability of the terminal device, where conditions that need to be satisfied for reception and processing of the first signal and the second signal are different for terminal devices with different capabilities, and the first signal and the second signal are sent based on the indication information.

In some embodiments, the first signal and/or the second signal is used to wake up the terminal device or supply power to the terminal device.

In some embodiments, the first network device and the second network device are the same device.

In some embodiments, the first signal and/or the second signal is any one of the following:
a single-tone signal;
a reference signal;
a synchronization signal; or
a narrowband signal.

In some embodiments, the first signal and the second signal are signals in an intra-band or signals in an inter-band.

In some embodiments, the terminal device is one or more of a zero-power terminal, a low-power terminal, a low-cost terminal, or a low-capability terminal.

Those skilled in the art should understand that the related description of the apparatus for clock determination described above according to the embodiment of the present disclosure can be understood with reference to the related description of the method for clock determination according to the embodiment of the present disclosure.

FIG. 16 is a schematic structural diagram of a communication device 1600 according to an embodiment of the present disclosure. The communication device may be a terminal device or a network device. As shown in FIG. 16, the communication device 1600 includes a processor 1610 that may invoke and execute a computer program from a memory to implement the method in the embodiment of the present disclosure.

Optionally, as shown in FIG. 16, the communication device 1600 may further include a memory 1620. The processor 1610 may invoke and execute a computer program from the memory 1620 to implement the method in the embodiment of the present disclosure.

The memory 1620 may be a separate device independent of the processor 1610 or may be integrated in the processor 1610.

Optionally, as shown in FIG. 16, the communication device 1600 may further include a transceiver 1630, and the processor 1610 may control the transceiver 1630 to communicate with other devices. Specifically, the processor may control the transceiver to send information or data to other devices, or receive information or data sent by other devices.

The transceiver 1630 may include a transmitter and a receiver. The transceiver 1630 may further include antennas, and the number of antennas may be one or more.

Optionally, the communication device 1600 may be the network device according to the embodiment of the present disclosure, and the communication device 1600 may implement corresponding flows implemented by the network device in various methods according to the embodiments of the present disclosure, which will not be repeated here for the sake of brevity.

Optionally, the communication device 1600 may specifically be the mobile terminal/terminal device according to the embodiment of the present disclosure, and the communication device 1600 may implement corresponding flows implemented by the mobile terminal/terminal device in various methods according to the embodiments of the present disclosure, which will not be repeated here for the sake of brevity.

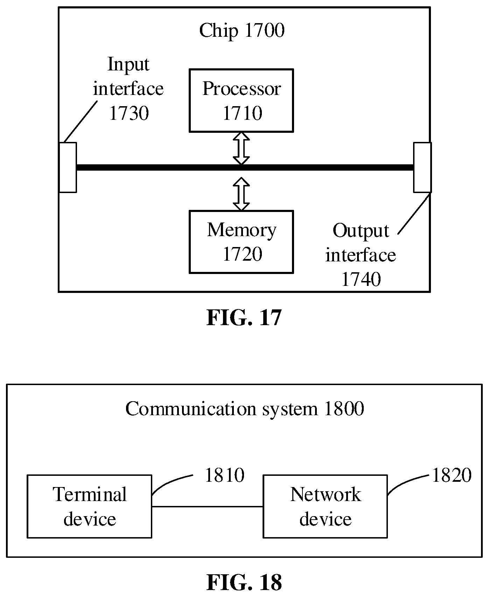

FIG. 17 is a schematic structural diagram of a chip according to an embodiment of the present disclosure. The chip 1700 shown in FIG. 17 includes a processor 1710, which may invoke and execute a computer program from a memory to implement the method in the embodiment of the present disclosure.

Alternatively, as shown in FIG. 17, the chip 1700 may further include a memory 1720. The processor 1710 may invoke and execute a computer program from the memory 1720 to implement the method in the embodiment of the present disclosure.

The memory 1720 may be a separate device independent of the processor 1710 or may be integrated in the processor 1710.

Optionally, the chip 1700 may further include an input interface 1730. The processor 1710 may control the input interface 1730 to communicate with other devices or chips. Specifically, the processor may control the input interface to acquire information or data sent by other devices or chips.

Optionally, the chip 1700 may further include an output interface 1740. The processor 1710 may control the output interface 1740 to communicate with other devices or chips. Specifically, the processor may control the output interface to output information or data to other devices or chips.

Optionally, the chip may be applied to the network device in the embodiment of the present disclosure, and the chip may implement the corresponding flows implemented by the network device in various methods of the embodiments of the present disclosure, which will not be repeated here for the sake of brevity.

Optionally, the chip may be applied to the mobile terminal/terminal device in the embodiment of the present disclosure, and the chip can implement the corresponding flows implemented by the mobile terminal/terminal device in various methods of the embodiments of the present disclosure, which will not be repeated here for the sake of brevity.

It should be understood that the chip mentioned in the embodiments of the present disclosure may also be referred to as a system-level chip, a system chip, a chip system, a system-on-chip chip, or the like.

An embodiment of the present disclosure also provides a computer storage medium for storing one or more programs which, when executed by at least one processor, performs the method in the embodiment of the present disclosure.

FIG. 18 is a schematic block diagram of a communication system 1800 according to an embodiment of the present disclosure. As shown in FIG. 18, the communication system 1800 includes a terminal device 1810 and a network device 1820.

The terminal device 1810 may be used to implement the functions implemented by the terminal device in the above-described method, and the network device 1820 may be used to implement the functions implemented by the network device in the above-described method, which not repeated here for the sake of brevity.

It should be understood that the processor of the embodiment of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a digital signal processor (DSP), an application specific integrated circuit (ASIC), a field programmable gate array (FPGA) or other programmable logic device, a discrete gate or transistor logic device, or a discrete hardware component, to implement or execute the methods, operations, and logical block diagrams disclosed in the embodiments of the present disclosure. The general purpose processor may be a microprocessor or any conventional processor or the like. The operations of the methods disclosed in connection with the embodiments of the present disclosure may be directly be executed by the hardware decoding processor, or may be executed by combining hardware and software modules in the decoding processor. The software module may be provided in a storage medium mature in the art, such as a random access memory, a flash memory, a read-only memory, a programmable read-only memory, or an electrically erasable programmable memory, a register, etc. The storage medium is arranged in the memory, and the processor reads the information in the memory, and completes the operations of the above methods in combination with the hardware thereof.

It may be understood that the memory in the embodiments of the present disclosure may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which serves as an external cache. By way of illustration, but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the systems and methods described herein is intended to include, but is not limited to, these and any other suitable type of memory.

It should be understood that the above memory is illustrative but is not limited thereto. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DR RAM), and the like. That is, the memory in the embodiments of the present disclosure is intended to include, but is not limited to, these and any other suitable type of memory.

The embodiments of the present disclosure further provide a computer-readable storage medium for storing a computer program.

Optionally, the computer-readable storage medium may be applied to the network device in the embodiment of the present disclosure, and the computer program causes the computer to execute the flows implemented by the network device in various methods in the embodiments of the present disclosure, which will not be repeated here for the sake of brevity.

Optionally, the computer-readable storage medium may be applied to the mobile terminal/terminal device in the embodiment of the present disclosure, and the computer program causes the computer to execute the flows implemented by the mobile terminal/terminal device in various methods of the embodiments of the present disclosure, which will not be repeated described here for the sake of brevity.

The embodiments of the present disclosure further provide a computer program product including computer program instructions.

Optionally, the computer program product may be applied to the network device in the embodiment of the present disclosure, and the computer program instructions cause the computer to execute the flows implemented by the network device in various methods in the embodiments of the present disclosure, which will not be repeated here for the sake of brevity.

Optionally, the computer program product may be applied to the mobile terminal/terminal device in the embodiment of the present disclosure, and the computer program instructions cause the computer to execute the flows implemented by the mobile terminal/terminal device in various methods of the embodiments of the present disclosure, which will not be repeated here for the sake of brevity.

The embodiments of the present disclosure further provide a computer program.

Optionally, the computer program may be applied to the network device in the embodiment of the present disclosure, and the computer program, when run on the computer, enables the computer to execute the flows implemented by the network device in various methods of the embodiments of the present disclosure, which will not be repeated here for the sake of brevity.

Optionally, the computer program may be applied to the mobile terminal/terminal device in the embodiment of the present disclosure, and the computer program, when run on the computer, enables the computer to execute the flows implemented by the mobile terminal/terminal device in various methods of the embodiment of the present disclosure, which will not be repeated here for the sake of brevity.

Those of ordinary skill in the art will appreciate that the elements and algorithmic operations of the various examples described in connection with the embodiments disclosed herein may be implemented in electronic hardware, or a combination of computer software and electronic hardware. Whether these functions are executed in hardware or software depends on the specific application and design constraints of the technical solution. Those skilled in the art may use different methods for implementing the described functions for each particular application, but such implementations should not be considered beyond the scope of the present disclosure.

Those skilled in the art may clearly understand that for convenience and brevity of the description, regarding the specific operation processes of the systems, devices, and units described above, reference may be made to the corresponding processes in the aforementioned method embodiments, and the specific operation processes of the systems, devices, and units described above are not repeated here.

In several embodiments provided herein, it should be understood that the disclosed systems, devices, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection shown or discussed may be an indirect coupling or communication connection through some interface, device or unit, which may be electrical, mechanical or otherwise.

The units described as separate units may or may not be physically separate, and the units displayed as units may or may not be physical units, that is, the units may be located at one place or may be distributed over a plurality of network units. Some or all of the units may be selected according to actual needs to achieve the purpose of the solution of the present embodiment.

In addition, various functional units in the embodiments of the present disclosure may be integrated in one processing unit, each unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or a part of the technical solution that contributes to the prior art or a part of the technical solution may be embodied in the form of a software product, the computer software product is stored in a storage medium, includes several instructions for causing a computer device (which may be a personal computer, server, or network device, etc.) to perform all or a part of the steps of the method described in various embodiments of the present disclosure. The storage medium includes a USB disk, a removable hard disk, a read-only memory (ROM), a random access memory (RAM), a magnetic disk, or an optical disk or a medium capable of storing program codes.

The foregoing is merely a specific embodiment of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be subject to the scope of protection of the claims.

## Claims

1. A method for clock determination, comprising:
receiving, by a terminal device, a first signal and a second signal, wherein the first signal is different from the second signal, and a clock of a to-be-transmitted signal of the terminal device is determined based on difference information between the first signal and the second signal.

2. The method of claim 1, wherein a frequency of the first signal is different from a frequency of the second signal, and/or a reception time of the first signal is different from a reception time of the second signal.

3. The method of claim 1 or 2, wherein the first signal and the second signal satisfy one or more of the following conditions:
a difference between a power of the first signal and a power of the second signal being less than or equal to a first threshold;
a frequency interval between a frequency of the first signal and a frequency of the second signal being less than or equal to a second threshold; or
a time interval between a reception time of the first signal and a reception time of the second signal being less than or equal to a third threshold.

4. The method of any one of claims 1 to 3, further comprising:
sending, by the terminal device, indication information for indicating a signal reception and processing capability of the terminal device, wherein conditions that need to be satisfied for reception and processing of the first signal and the second signal are different for terminal devices with different capabilities, and the first signal and the second signal are sent based on the indication information.

5. The method of any one of claims 1 to 4, wherein the first signal and/or the second signal is used to wake up the terminal device or supply power to the terminal device.

6. The method of any one of claims 1 to 5, wherein the first signal and the second signal are from a same network device, or from different network devices.

7. The method of any one of claims 1 to 6, wherein the first signal and/or the second signal is any one of the following:
a single-tone signal;
a reference signal;
a synchronization signal; or
a narrowband signal.

8. The method of any one of claims 1 to 7, wherein the first signal and the second signal are signals in an intra-band or signals in an inter-band.

9. The method of any one of claims 1 to 8, wherein the clock of the to-be-transmitted signal of the terminal device being determined based on the difference information between the first signal and the second signal, comprises one or more of the following:
the clock of the to-be-transmitted signal being determined based on frequency difference information between a frequency of the first signal and a frequency of the second signal;
the clock of the to-be-transmitted signal being determined based on time difference information between a reception time of the first signal and a reception time of the second signal; or
the clock of the to-be-transmitted signal being determined based on an association between a first clock of the first signal and a second clock of the second signal.

10. The method of claim 9, wherein the clock of the to-be-transmitted signal being determined based on the frequency difference information between the frequency of the first signal and the frequency of the second signal, comprises:
performing frequency mixing or multiplication on a frequency difference between a correlation signal of the first signal and a correlation signal of the second signal to obtain a third signal,
wherein the correlation signal is an intermediate frequency signal of the first signal, an intermediate frequency signal of the second signal, a zero frequency signal of the first signal, a zero frequency signal of the second signal, and a high-order component signal after cross modulation or inter modulation of the first signal and the second signal; and
determining the clock of the to-be-transmitted signal based on a clock of the third signal.

11. The method of claim 9 or 10, wherein the clock of the to-be-transmitted signal being determined based on the time difference information between the reception time of the first signal and the reception time of the second signal, comprises:
performing a correlation operation on the first signal and the second signal based on the time difference information to obtain correlation information between the first signal and the second signal; and
determining the clock of the to-be-transmitted signal based on the correlation information.

12. The method of any one of claims 9 to 11, wherein the clock of the to-be-transmitted signal being determined based on the association between the first clock of the first signal and the second clock of the second signal, comprises:
extracting a first clock of the first signal and a second clock of the second signal; and
determining the clock of the to-be-transmitted signal based on a first association relationship, the first clock and the second clock, wherein the first association relationship is determined based on a frequency relationship among the first signal, the second signal, and the to-be-transmitted signal.

13. The method of any one of claims 1 to 12, wherein the terminal device is one or more of a zero-power terminal, a low-power terminal, a low-cost terminal, or a low-capability terminal.

14. A method for clock determination, comprising:
sending, by a first network device, a first signal to a terminal device, wherein the first signal is different from a second signal sent by a second network device to the terminal device, and the first signal and the second signal are used to determine a clock of a to-be-transmitted signal by the terminal device.

15. The method of claim 14, wherein a frequency of the first signal is different from a frequency of the second signal, and/or a reception time of the first signal is different from a reception time of the second signal.

16. The method of claim 14 or 15, wherein the first signal and the second signal satisfy one or more of the following conditions:
a difference between a power of the first signal and a power of the second signal being less than or equal to a first threshold;
a frequency interval between a frequency of the first signal and a frequency of the second signal being less than or equal to a second threshold; or
a time interval between a reception time of the first signal and a reception time of the second signal being less than or equal to a third threshold.

17. The method of any of claims 14 to 16, wherein,
receiving, by the first network device, indication information sent by the terminal device, the indication information being used for indicating a signal reception and processing capability of the terminal device, wherein conditions that need to be satisfied for reception and processing of the first signal and the second signal are different for terminal devices with different capabilities, and the first signal and the second signal are sent based on the indication information.

18. The method of any one of claims 14 to 17, wherein the first signal and/or the second signal is used to wake up the terminal device or supply power to the terminal device.

19. The method of any one of claims 14 to 18, wherein the first network device and the second network device are the same device.

20. The method of any one of claims 14 to 19, wherein the first signal and/or the second signal is any one of the following:
a single-tone signal;
a reference signal;
a synchronization signal; or
a narrowband signal.

21. The method of any one of claims 14 to 20, wherein the first signal and the second signal are signals in an intra-band or signals in an inter-band.

22. The method of any one of claims 14 to 21, wherein the terminal device is one or more of a zero-power terminal, a low-power terminal, a low-cost terminal, or a low-capability terminal.

23. An apparatus for clock determination, applied to a terminal device, the apparatus comprising:
a receiving unit, configured to receive a first signal and a second signal, wherein the first signal is different from the second signal, a clock of a to-be-transmitted signal of the terminal device is determined based on difference information between the first signal and the second signal.

24. An apparatus for clock determination, applied to a first network device, the apparatus comprising:
a sending unit, configured to send a first signal to the terminal device, wherein the first signal is different from a second signal sent by a second network device to the terminal device, and the first signal and the second signal are used to determine a clock of a to-be-transmitted signal by the terminal device.

25. A terminal, comprising:
a memory, configured for storing computer-executable instructions; and
a processor, connected to the memory and configured for executing the computer-executable instructions to perform the method of any one of claims 1 to 13.

26. A network device, comprising:
a memory, configured for storing computer-executable instructions; and
a processor, connected to the memory and configured for executing the computer-executable instructions to perform the method of any one of claims 14 to 22.

27. A chip, comprising:
a processor, configured for invoking and executing a computer program from a memory, to enable a device on which the chip is mounted to perform the method of any one of claims 1 to 13, or the method of any one of claims 14 to 22.

28. A computer-readable storage medium for storing a computer program which, when executed by at least one processor, performs the method of any one of claims 1 to 13, or the method of any one of claims 14 to 22.

29. A computer program product comprising a computer storage medium, which stores a computer program comprising instructions that, when executed by at least one processor, perform the method of any one of claims 1 to 13, or the method of any one of claims 14 to 22.

30. A computer program that causes a computer to perform the method of any one of claims 1 to 13, or the method of any one of claims 14 to 22.
